(19) Europäisches Patentamt
European Patent Office
Office européen des brevets

(11) EP 3 121 314 A1

(12) # EUROPEAN PATENT APPLICATION
published in accordance with Art. 153(4) EPC

(43) Date of publication:
**25.01.2017 Bulletin 2017/04**

(21) Application number: **15765590.3**

(22) Date of filing: **18.03.2015**

(51) Int Cl.:
***D01F 8/06*** *(2006.01)* ***D04H 3/007*** *(2012.01)*
***D04H 3/147*** *(2012.01)*

(86) International application number:
**PCT/JP2015/058144**

(87) International publication number:
**WO 2015/141750 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.03.2014 JP 2014058595**
**11.08.2014 JP 2014163848**
**26.01.2015 JP 2015012207**

(71) Applicant: **Idemitsu Kosan Co. Ltd (IKC)**
**Chiyoda-ku**
**Tokyo 100-8321 (JP)**

(72) Inventors:
- **KOORI, Yohei**
**Ichihara-shi**
**Chiba 299-0193 (JP)**
- **TAKEBE, Tomoaki**
**Ichihara-shi**
**Chiba 299-0193 (JP)**
- **MINAMI, Yutaka**
**Ichihara-shi**
**Chiba 299-0193 (JP)**
- **KANAMARU, Masami**
**Ichihara-shi**
**Chiba 299-0193 (JP)**

(74) Representative: **Gille Hrabal**
**Brucknerstrasse 20**
**40593 Düsseldorf (DE)**

(54) **CRIMPED FIBER AND NONWOVEN FABRIC**

(57) Provided is a crimped fiber constituted of the following first component and second component, wherein the first component is a propylene-based resin composition containing a propylene-based polymer (1-A) in which a melting point (Tm-D) obtained under a specified condition exceeds 120°C and a propylene-based polymer (1-B) satisfying the conditions that (a) a weight average molecular weight (Mw) is 10,000 to 200,000, (b) a molecular weight distribution (Mw/Mn) is less than 4.0, and (c) a melting point (Tm-D) obtained under a specified condition is 0 to 120°C; and the second component is a propylene-based polymer (2) in which a melt flow rate (MFR) under the foregoing measurement condition is 1 g/10 min or more and 2,000 g/10 min or less, and a melting point (Tm-D) observed under the foregoing measurement condition by using a differential scanning calorimeter (DSC) exceeds 120°C, or a propylene-based resin composition containing the propylene-based polymer (2).

EP 3 121 314 A1

**Description**

TECHNICAL FIELD

The present invention relates to a crimped fiber and a nonwoven fabric.

BACKGROUND ART

In recent years, there have been made attempts to obtain woven fabrics, knitted goods, or nonwoven fabrics, each of which is rich in stretchability, by giving latent crimpability to thermoplastic synthetic fibers made of a polyester, a polyamide, or the like to form a textile and utilizing a latent crimping performance which the fibers have.

In addition, for example, it is also known that a latent crimped yarn of polyolefin is used and formed into a web by the card method, and the web is processed into a spun lace by a jet water flow, followed by heat shrinkage; or a previously stretched latent crimped yarn of polyolefin is used and formed into a web by the card method in the same manner as described above, and the web is processed into a spun lace by a jet water flow, followed by heat shrinkage, whereby an elastic nonwoven fabric or thick nonwoven fabric, or an elastic woven fabric each using an inexpensive polyolefin, or the like is obtained.

Meanwhile, there are proposed a variety of latently crimpable conjugate fibers that are used for producing a stretchable nonwoven fabric. For example, there is proposed a thermally fusible, latently crimpable conjugate fiber in which three resin components having a different melting point or softening point from each other are disposed at a specified position in a short-direction cross section of the fiber so as to have high bulkiness, high nonwoven fabric strength, and stretchability when used for a nonwoven fabric (see PTL 1). In addition, there is also proposed a latently crimpable conjugate fiber using a core-sheath type composite material using polyolefins having a different melting point from each other (see PTL 2).

CITATION LIST

PATENT LITERATURE

PTL 1: JP-A-2012-251254
PTL 2: JP-A-2012-158861

SUMMARY OF INVENTION

TECHNICAL PROBLEM

In view of the foregoing circumstances, the present invention has been made, and an object thereof is to provide a crimped fiber having strong crimpability using a polyolefin-based material and a nonwoven fabric including this crimped fiber.

SOLUTION TO PROBLEM

The present inventors made extensive and intensive investigations. As a result, it has been found that in a crimped fiber including a first component and a second component, the above-described object is achieved by at least adding specified propylene-based polymers having a different melting point from each other to the first component. The present invention has been accomplished on the basis of such a finding.

Specifically, the present invention provides the following inventions.

[1] A crimped fiber constituted of a first component and a second component, wherein
the first component is a propylene-based resin composition containing a propylene-based polymer (1-A) in which a melt flow rate (MFR) measured at a temperature of 230°C and a load of 21.18 N is 1 g/10 min or more and 2,000 g/10 min or less, and a melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) exceeds 120°C, and a propylene-based polymer (1-B) satisfying the following conditions (a) to (c):

(a) a weight average molecular weight (Mw) is 10,000 to 200,000,
(b) a molecular weight distribution (Mw/Mn) is less than 4.0, and
(c) a melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) is 0 to 120°C, and

the second component is a propylene-based polymer (2) in which a melt flow rate (MFR) measured under the foregoing measurement condition is 1 g/10 min or more and 2,000 g/10 min or less, and a melting point (Tm-D) observed under the foregoing measurement condition by using a differential scanning calorimeter (DSC) exceeds 120°C, or a propylene-based resin composition containing the propylene-based polymer (2).
[2] The crimped fiber according to the above [1], wherein the melt flow rate (MFR) of the resin component constituting the first component and the melt flow rate (MFR) of the resin component constituting the second component are different from each other.
[3] The crimped fiber according to the above [1], wherein a degree of crystallization of the resin component constituting the first component and a degree of crystallization of the resin composition constituting the second component are different from each other.
[4] The crimped fiber according to the above [1], wherein a semi-crystallization time of the resin component constituting the first component and a semi-crystallization time of the resin component constituting the second component are different from each other.
[5] The crimped fiber according to any of the above [1] to [4], wherein the first component contains the propylene-based polymer (1-B) in an amount of 1% by mass or more and 95% by mass or less, and a mass ratio of the propylene-based resin composition that is the first component to the propylene-based resin composition that is the second component is from 10/90 to 90/10.
[6] The crimped fiber according to any of the above [1] to [5], wherein the propylene-based polymer (1-B) is a propylene homopolymer or a copolymer having a copolymerization ratio of a propylene unit of 50 mol% or more.
[7] The crimped fiber according to any of the above [1] to [6], wherein the propylene-based polymer (1-B) is a propylene homopolymer.
[8] The crimped fiber according to any of the above [1] to [7], wherein the crimped fiber is a side-by-side type fiber or an eccentric core-sheath type fiber.
[9] A nonwoven fabric including the crimped fiber according to any of the above [1] to [8].
[10] A multilayred nonwoven fabric including a laminate of two or more layers, wherein at least one layer thereof is the nonwoven fabric according to the above [9].

## ADVANTAGEOUS EFFECTS OF INVENTION

In accordance with the present invention, a crimped fiber having strong crimpability using a polyolefin-based material is provided. In addition, a nonwoven fabric including this crimped fiber is bulky and has favorable texture, and therefore, the nonwoven fabric is provided as a nonwoven fabric suitable for various fiber products, such as a disposable diaper, a sanitary product, a hygienic product, a clothing material, a bandage, a packaging material, a filter, a wiper, etc.

## DESCRIPTION OF EMBODIMENTS

### [Crimped Fiber]

The crimped fiber of the present invention is constituted of the following first component and second component.
The first component is a propylene-based resin composition containing a propylene-based polymer (1-A) in which a melt flow rate (MFR) measured at a temperature of 230°C and a load of 21.18 N is 1 g/10 min or more and 2,000 g/10 min or less, and a melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) exceeds 120°C, and a propylene-based polymer (1-B) satisfying the following conditions (a) to (c).

(a) A weight average molecular weight (Mw) is 10,000 to 200,000.
(b) A molecular weight distribution (Mw/Mn) is less than 4.0.
(c) A melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) is 0 to 120°C.

The second component is a propylene-based polymer (2) in which a melt flow rate (MFR) measured under the foregoing measurement condition is 1 g/10 min or more and 2,000 g/10 min or less, and a melting point (Tm-D) observed under the foregoing measurement condition by using a differential scanning calorimeter (DSC) exceeds 120°C, or a propylene-based resin composition containing the propylene-based polymer (2).

Here, in the present specification, the "crimped fiber" is used in a meaning including a "side-by-side type fiber" and an "eccentric core-sheath type fiber", in which thermoplastic resins having a different heat shrinkage ratio from each other are combined. The core-sheath type fiber refers to a fiber whose cross section is composed of a "core" as an inner layer and a "sheath" as an outer layer. The "side-by-side type fiber" refers to a fiber which is obtained by melt extruding at least two resins, sticking the at least two resins to each other, and paralleling and spinning the resultant in the sticking direction. A cross-sectional shape of the side-by-side type fiber is not limited to a substantially circular shape (in a meaning including a "true circle"), but taking into consideration the bulkiness, the cross-sectional shape of the side-by-side type fiber may also be an ellipse, a snowman silhouette shape, or the like. However, from the viewpoint of versatility, the cross-sectional shape of the side-by-side type fiber is preferably a true circle.

The "substantially circular shape" means that a ratio of length of two axes intersecting each other at 90° in the center of the fiber cross section is about 1.2/1 or less; and the "true circle" means that a ratio of length of two axes intersecting each other at 90° in the center of the fiber cross section is about 1/1. The "ellipse" means that a ratio of length of two axes intersecting each other at 90° in the center of the fiber cross section is larger than about 1.2/1; and the "snowman silhouette shape" means a cross-sectional shape in which plural axes passing through the center of the fiber cross section include a minor axis and a major axis, and when the length of the major axis versus the length of the minor axis is plotted, at least two maximum values are present.

A ratio of the at least two resins occupying in the cross section of the side-by-side type fiber is chiefly determined by an extrusion ratio of the resins at the time of melt extrusion.

The "eccentric core-sheath type fiber" refers to a fiber in which in the cross-sectional shape of the eccentric core-sheath type fiber, the center of gravity of an inner layer is different from the center of gravity of the whole of the fiber and is prepared using a composite type nozzle disposed such that the center of gravity of an inner layer is different from the center of gravity of the whole of the fiber, for example, an eccentric core-sheath type composite nozzle.

A ratio of the at least two resins occupying in the cross section of the eccentric core-sheath type fiber is chiefly determined by an extrusion ratio of the resins at the time of melt extrusion.

<First Component>

The first component is a propylene-based resin composition (1) containing the propylene-based polymer (1-A) and the propylene-based polymer (1-B) as described below.

[Propylene-based Polymer (1-A)]

In the propylene-based polymer (1-A) that is used in the present invention, a melt flow rate (hereinafter sometimes referred to simply as "MFR") measured at a temperature of 230°C and a load of 21.18 N is 1 g/10 min or more and 2,000 g/10 min or less, preferably 10 g/10 min or more and 1,500 g/10 min or less, more preferably 15 g/10 min or more and 1,000 g/10 min or less, and still more preferably 18 g/10 min or more and 900 g/10 min or less.

The melt flow rate (MFR) was measured using an extrusion-type plastometer prescribed in JIS K6760 by the measurement method in conformity with JIS K7210.

The propylene-based polymer (1-A) that is used in the present invention is not particularly limited so long as its melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) exceeds 120°C. PP3155 (a trade name, manufactured by ExxonMobil Chemical), Y2005GP (a trade name, manufactured by Prime Polymer Co., Ltd.), S119 (a trade name, manufactured by Prime Polymer Co., Ltd.), and the like may be used.

The propylene-based polymer (1-A) may be either a propylene homopolymer or a copolymer. In the case of a copolymer, a copolymerization ratio of a propylene unit is 50 mol% or more, preferably 60 mol% or more, more preferably 70 mol% or more, still more preferably 90 mol% or more, and especially preferably 95 mol% or more. Examples of copolymerizable monomers include $\alpha$-olefins having 2 or 4 to 20 carbon atoms, such as ethylene, 1-butene, 1-pentene, 1-hexene, 1-octene, 1-decene, etc., acrylic esters, such as methyl acrylate, etc., vinyl acetate, and the like. From the viewpoint of formability, a propylene homopolymer is preferred.

As the propylene-based polymer (1-A), one having a melting point (Tm-D), in which is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) of higher than 120°C and 170°C or lower is preferred, and one having the melting point

(Tm-D) of 125 to 167°C is more preferred.

A content of the above-described propylene-based polymer (1-A) in the first component is preferably 5% by mass or more and 99% by mass or less, more preferably 40% by mass or more and 99% by mass or less, still more preferably 50% by mass or more and 97% by mass or less, yet still more preferably 50% by mass or more and 95% by mass or less, and especially preferably 60% by mass or more and 95% by mass or less. From the viewpoints of crimping degree and stretching rate, the content of the propylene-based polymer (1-A) is most preferably 60% by mass or more and 90% by mass or less.

[Propylene-based Polymer (1-B)]

The propylene-based polymer (1-B) that is used in the present invention has the following properties (a) to (c), and these properties may be adjusted by selection of a catalyst or reaction conditions on producing the propylene-based polymer (1-B).

(a) A weight average molecular weight (Mw) is 10,000 or more and 200,000 or less.

In the above-described propylene-based polymer (1-B), when the weight average molecular weight is 10,000 or more, the viscosity of the propylene-based polymer (1-B) is not excessively low but appropriate, and hence, end breakage on spinning is suppressed. When the weight average molecular weight is 200,000 or less, the viscosity of the propylene-based polymer (1-B) is not excessively high, and spinnability is improved. This weight average molecular weight is preferably 30,000 or more and 150,000 or less, and more preferably 50,000 or more and 150,000 or less.

(b) A molecular weight distribution (Mw/Mn) < 4.0

In the above-described propylene-based polymer (1-B), when the molecular weight distribution (Mw/Mn) is less than 4.0, the generation of stickiness in the fiber obtained by spinning is suppressed. This molecular weight distribution is preferably 3.0 or less.

(c) A melting point (Tm-D)

From the viewpoint of stabilizing the spinnability, in the above-described propylene-based polymer (1-B), the melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) is 0°C or higher and 120°C or lower, and preferably 40°C or higher and 120°C or lower.

As the above-described propylene-based polymer (1-B), one further satisfying the following condition (d) is preferably used.

(d) A mesopentad Fraction [mmmm] is 20 mol% or more and 80 mol% or less.

When the mesopentad fraction [mmmm] is less than 20 mol%, the spinnability becomes instable, and reduction of the fiber diameter is difficultly achieved. When the mesopentad fraction [mmmm] is more than 80 mol%, on processing into a nonwoven fabric, flexibility of the nonwoven fabric is impaired. This mesopentad fraction [mmmm] is preferably 30 mol% or more and 60 mol% or less, more preferably 40 mol% or more and 60 mol% or less, and still more preferably 40 mol% or less and 55 mol% or less.

As the above-described propylene-based polymer (1-B), one further satisfying the following conditions (e) and (f) is preferably used.

(e) rrrr/(1-mmmm) ≤ 0.1

The value of rrrr/(1-mmmm) is an indicator indicating the uniformity of regularity distribution of the propylene-based polymer (1-B). In the above-described propylene-based polymer (1-B), when the rrrr/(1-mmmm) is more than 0.1, the regularity distribution is expanded, and the resultant becomes a mixture with atactic polypropylene, thereby likely causing stickiness. From such a viewpoint, the rrrr/(1-mmmm) is preferably 0.05 or less, and more preferably 0.04 or less.

The stereoregularity of the above-described conditions (d) and (e) is determined by NMR.

In the present invention, the mesopentad fraction [mmmm], the racemic pentad fraction [rrrr], and the racemic-meso-racemic-mesopentad fraction [rmrm] are measured in conformity with the method proposed by A. Zambelli, et al., "Macromolecules, 6, 925 (1973)" and are a meso fraction, a racemic fraction, and a racemic-meso-racemic-meso fraction,

respectively in the pentad units of the polypropylene molecular chain that are measured based on a signal of the methyl group in the $^{13}C$-NMR spectrum. As the mesopentad fraction [mmmm] increases, the stereoregularity increases. The triad fractions [mm], [rr], and [mr] are also calculated by the above-described method.

The measurement of the $^{13}C$-NMR spectrum in the present specification was performed by a method described in the Examples.

The above-described (a) weight average molecular weight (Mw) and (b) molecular weight distribution (Mw/Mn) are determined by means of a gel permeation chromatography (GPC) measurement. The weight average molecular weight of the present invention is a weight average molecular weight as converted into polystyrene, as measured by using the following device under the following conditions, and the molecular weight distribution is a value calculated from a number average molecular weight (Mn) as measured similarly and the above-described weight average molecular weight.

The propylene-based polymer (1-B) may be either a propylene homopolymer or a copolymer. In the case of a copolymer, a copolymerization ratio of a propylene unit is 50 mol% or more, preferably 60 mol% or more, and more preferably 70 mol% or more. Examples of copolymerizable monomers include $\alpha$-olefins having 2 or 4 to 20 carbon atoms, such as ethylene, 1-butene, 1-pentene, 1-hexene, 1-octene, 1-decene, etc., acrylic esters, such as methyl acrylate, etc., vinyl acetate, and the like. From the viewpoint of formability, a propylene homopolymer is preferred.

The above-described propylene-based resin (1-B) may be produced using a metallocene-based catalyst as described in, for example, WO 2003/087172A. In particular, a metallocene-based catalyst using a transition metal compound in which a ligand forms a crosslinked structure via a crosslinking group is preferred. Above all, a metallocene-based catalyst obtained by combining a transition metal compound in which a crosslinked structure is formed via two crosslinking groups with a cocatalyst is preferred.

Specifically, examples thereof include a polymerization catalyst containing (i) a transition metal compound represented by the general formula (I) and (ii) a component selected from (ii-1) a compound capable of reacting with the transition metal compound that is the component (i) or a derivative thereof to form an ionic complex and (ii-2) an aluminoxane.

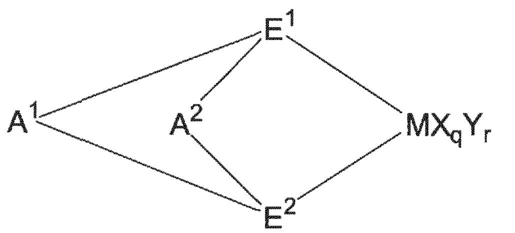

··· (I)

[In the formula, M represents a metal element belonging to any one of the Groups 3 to 10 or the lanthanoid series in the periodic table; each of $E^1$ and $E^2$ represents a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group, and a silicon-containing group, and forms a crosslinked structure via $A^1$ and $A^2$, and may be the same as or different from each other; X represents a $\sigma$-bonding ligand, and when a plurality of Xs are present, the plurality of Xs may be the same as or different from each other, and each X may crosslink with any other X, $E^1$, $E^2$, or Y; Y represents a Lewis base, and when a plurality of Ys are present, the plurality of Ys may be the same as or different from each other, and each Y may crosslink with any other Y, $E^1$, $E^2$, or X; each of $A^1$ and $A^2$ represents a divalent crosslinking group that bonds two ligands and represents a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and may be the same as or different from each other; q represents an integer of 1 to 5 and corresponds to [(valence of M) - 2]; and r represents an integer of 0 to 3.]

The transition metal compound that is the above-described component (i) is preferably a transition metal compound in which the ligand is of a (1,2')(2,1') double crosslinking type, and examples thereof include (1,2'-dimethylsilylene)(2,1'-dimethylsilylene)-bis(3-trimethylsilylmethylindenyl)zi rconium dichloride.

As specific examples of the compound that is the above-described component (ii-1), there may be exemplified triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, silver perchlorate, silver trifluoroaceate, silver trifluoromethanesulfonate, and the like.

Examples of the aluminoxane that is the above-described component (ii-2) include known chain aluminoxanes and cyclic aluminoxanes.

In addition, the propylene-based resin (A) may also be produced by jointly using an organoaluminum compound, such as trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, etc.

A content of the above-described propylene-based resin (1-B) in the first component is 1% by mass or more and 95% by mass, preferably 1% by mass or more and 60% by mass or less, more preferably 3% by mass or more and 50% by mass or less, still more preferably 5% by mass or more and 50% by mass or less, especially preferably 5% by mass or more and 40% by mass or less, and most preferably 10% by mass or more and 40% by mass or less. When the content of the propylene-based resin (1-B) in the first component is 95% by mass or less, the degree of crystallization on the spinning line does not become extremely slow, and the spinnability becomes stable. When the content of the propylene-based resin (1-B) in the first component is 1% by mass or more, it becomes possible to achieve reduction of the fiber diameter, and the flexibility of the nonwoven fabric on processing into a nonwoven fabric is improved with a decrease of the elastic modulus of fiber.

Examples of the above-described propylene-based polymer (1-B) include "S400" (weight average molecular weight (Mw): 45,000), "S600" (weight average molecular weight (Mw): 75,000), and "S901" (weight average molecular weight (Mw): 130,000) of "L-MODU" (a registered trademark) (manufactured by Idemitsu Kosan Co., Ltd.).

<Second Component>

The second component is a propylene-based polymer (2) as described below, or a propylene-based resin composition (2) containing a propylene-based polymer (2) as described below.

In the propylene-based polymer (2) in the present invention, a melt flow rate (MFR) measured at a temperature of 230°C and a load of 21.18 N is 1 g/10 min or more and 2,000 g/10 min or less, preferably 10 g/10 min or more and 1,500 g/10 min or less, more preferably 15 g/10 min or more and 1,000 g/10 min or less, and still more preferably 18 g/10 min or more and 900 g/10 min or less.

As for the measurement method of the melt flow rate (MFR), it was measured in the same manner as in the measurement method in the first component.

In the present invention, the propylene-based polymer (2) is not particularly limited so long as its melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) exceeds 120°C. PP3155 (a trade name, manufactured by ExxonMobil Chemical), Y2005GP (a trade name, manufactured by Prime Polymer Co., Ltd.), S119 (a trade name, manufactured by Prime Polymer Co., Ltd.), and the like may be used.

The propylene-based polymer (2) may be either a propylene homopolymer or a copolymer. In the case of a copolymer, a copolymerization ratio of a propylene unit is 50 mol% or more, preferably 60 mol% or more, more preferably 70 mol% or more, still more preferably 90 mol% or more, and especially preferably 95 mol% or more. Examples of copolymerizable monomers include $\alpha$-olefins having 2 or 4 to 20 carbon atoms, such as ethylene, 1-butene, 1-pentene, 1-hexene, 1-octene, 1-decene, etc., acrylic esters, such as methyl acrylate, etc., vinyl acetate, and the like. From the viewpoint of formability, a propylene homopolymer is preferred.

As the propylene-based polymer (2) that is used as the second component, one having a melting point (Tm-D) defined as a peak top of a peak observed on the highest temperature side of a melting endothermic curve obtained

by holding under a nitrogen atmosphere at -10°C for 5 minutes and then increasing the temperature at a rate of 10°C/min by using a differential scanning calorimeter (DSC) of higher than 120°C and 170°C or lower is preferred, and one having the melting point (Tm-D) of 125 to 167°C is more preferred.

In the case where the second component is the propylene-based resin composition (2) containing the above-described propylene-based polymer (2), though the propylene-based resin composition (2) may contain the above-described propylene-based polymer (1-B), from the viewpoints of high crimping degree and favorable stretching rate, the second component is preferably the propylene-based polymer (2).

The propylene-based polymer (1-A) in the above-described first component and the propylene-based polymer (2) as the second component may be the same resin, or may be properly selected from a different resin from each other depending upon the crimping degree or stretching rate of the crimped fiber.

However, in the crimping-type fiber, taking into consideration the matter of obtaining a high crimping degree or stretching rate, it is preferred that the MFR of the propylene-based polymer (1-A) that is the first component is different from the MFR of the propylene-based polymer (2) that is the second component. In the case where the propylene-based polymer (1-A) and the propylene-based polymer (2) are the same resin, by at least adding the propylene-based polymer (1-B) to the first component, the crimped fiber may be obtained without performing a heat treatment or a stretching treatment.

[Relation between First Component and Second Component]

In the present invention, it is preferred that the first component and the second component are provided with the following relation.

In the crimped fiber, the melt flow rate (MFR) of the resin component constituting the first component and the melt flow rate (MFR) of the resin component constituting the second component are different from each other.

In the crimped fiber of the present invention, as described above, the melt flow rate (MFR) of the propylene-based resin composition (1) constituting the first component and the melt flow rate (MFR) of the propylene-based polymer (2) constituting the second component are different from each other.

When the above-described relations are satisfied, the crimped fiber is obtained.

Here, with respect to the propylene-based resin composition (1) obtained by mixing the propylene-base polymer (1-A) and the propylene-based polymer (1-B) in a desired mass ratio, the melt flow rate (MFR) of the propylene-based resin composition (1) constituting the first component is measured at a temperature of 230°C and a load of 21.18 N by using an extrusion-type plastometer prescribed in JIS K6760 by the measurement method in conformity with JIS K7210.

In the above-described relation of the melt flow rate (MFR), as a difference in the MFR between the both components is large, the high crimping properties are revealed. However, taking into consideration other physical properties, such as fiber strength, etc., the propylene-based resin composition (1) that is the first component, and either the propylene-based polymer (2) or the propylene-based resin composition (2) that is the second component, are properly selected in view of the above-described relation.

In the crimped fiber of the present invention, the MFR of the resin component constituting the first component is 2,000 g/10 min or less, preferably 10 to 1,500 g/10 min, more preferably 15 to 1,000 g/10 min, and still more preferably 18 to 900 g/10 min.

On the other hand, in the crimped fiber of the present invention, taking into consideration the matter that not only the above-described relation in MFR between the first component and the second component is satisfied, but also the preferred range of the MFR of the propylene-based resin composition (1) that is the first component, the MFR of the resin component constituting the second component is 2,000 g/10 min or less, preferably 10 to 1,500 g/10 min, more preferably 15 to 1,000 g/10 min, and still more preferably 18 to 900 g/10 min.

In the crimped fiber of the present invention, a degree of crystallization of the resin component constituting the first component and a degree of crystallization of the resin component constituting the second component are different from each other.

The degree of crystallization of the resin component constituting the first component is preferably 5% or more and 60% or less, more preferably 10% or more and 55% or less, and still more preferably 15% or more and 50% or less.

The degree of crystallization of the resin component constituting the second component is preferably 25% or more and 60% or less, more preferably 30% or more and 55% or less, and still more preferably 35% or more and 50% or less.

The degree of crystallization was measured by the following method.

A melting endotherm (ΔH-D) is calculated from a melting endothermic curve obtained by holding under a nitrogen atmosphere at -10°C for 5 minutes and then increasing the temperature at a rate of 10°C/min by using a differential scanning calorimeter (DSC). The degree of crystallization was calculated from a ratio of the obtained melting endotherm (ΔH-D) relative to a melting endotherm (209 J/g) at the time of perfectly crystallizing polypropylene.

The melting endotherm (ΔH-D) is calculated in a manner in which when a line connecting a point on the low-temperature side free from a change of the amount of heat with a point on the high-temperature side free from a change of the amount of heat is defined as a baseline, an area surrounded by a line portion including the peak of the melting endothermic curve obtained by the DSC measurement and the baseline is determined.

In the above-described relation of the degree of crystallization, as a difference in the degree of crystallization between the both components is large, the high crimping properties are revealed. However, taking into consideration a balance with spinnability (whether or not it is possible to stably perform spinning without causing end breakage), stickiness of the fiber, or the like, the propylene-based resin composition (1) that is the first component, and either the propylene-based polymer (2) or the propylene-based resin composition (2) that is the second component, are properly selected in view of the above-described relation.

In the crimped fiber of the present invention, a half-crystallization time of the resin component constituting the first component and a half-crystallization time of the resin component constituting the second component are different from each other.

The half-crystallization time was measured by the following method.

Using FLASH DSC (manufactured by Mettler Toledo International Inc.), a sample is heated and melted at 230°C for 2 minutes and then cooled to 25°C at a rate of 2,000°C/sec, thereby measuring a change in calorific value with time in an isothermal crystallization process at 25°C. When an integrated value of the calorific value from the start of isothermal crystallization until the completion of crystallization was defined as 100%, a time from the start of isothermal crystallization until the integrated value of the calorific value became 50% was defined as the half-crystallization time.

In the above-described relation of the half-crystallization time, as a difference in the half-crystallization time between the both components is large, the high crimping properties are revealed. However, taking into consideration a balance with spinnability (whether or not it is possible to stably perform spinning without causing end breakage) or the like, the propylene-based resin composition (1) that is the first component, and either the propylene-based polymer (2) or propylene-based resin composition (2) that is the second component, are properly selected in view of the above-described relation.

According to this, in the production of a crimped fiber, after the resin that is the first component and the resin that is the second component are joined and discharged to achieve spinning by means of melt extrusion as in the conventional manner, a fiber having strong crimping properties is obtained without performing a post-treatment, such as stretching, heating, etc. According to the conventional manner, a post-treatment step after spinning was essential taking into consideration the raw materials used for the production of a crimped fiber and physical properties thereof, and there was possibly observed the case where a crimping degree changes depending upon conditions of a post-treatment, such as stretching, heating, etc. In consequence, in the present invention, in view of the fact that the post-treatment step is not essential, a fiber having a stable crimping degree is obtained, and it may be contemplated to achieve a decrease of production costs and downsizing of production apparatus due to reduction of a number of steps.

In the crimped fiber of the present invention, a mass ratio of the propylene-based resin composition (1) that is the first component to either the propylene-based polymer (2) or the propylene-based resin composition (2) that is the second component is from 10/90 to 90/10, preferably from 20/80 to 80/20, more preferably from 30/70 to 70/30, still more preferably from 40/60 to 60/40, and especially preferably 50/50. So long as the above-described mass ratio falls within the range of from 10/90 to 90/10, in the crimped fiber, crimping properties and stretchability are revealed.

Furthermore, so long as the first component contains the propylene-based polymer (B-1) in an amount of 1% by mass or more and 95% by mass or less, and the mass ratio of the propylene-based resin composition that is the first component to the propylene-based resin composition that is the second component is from 10/90 to 90/10, the crimped fiber is excellent in a balance among crimping properties, stretchability, and flexibility.

In the crimped fiber of the present invention, at least one of the first component and the second component may be compounded with a conventionally known additive. Examples of the additive include a foaming agent, a crystal nucleating agent, a weatherability stabilizer, a UV absorber, a light stabilizer, a heat resistance stabilizer, an antistatic agent, a release agent, a flame retardant, a synthetic oil, a wax, an electric property-improving agent, a slip inhibitor, an anti-blocking agent, a viscosity-controlling agent, a coloring inhibitor, a defogging agent, a lubricant, a pigment, a dye, a plasticizer, a softening agent, an age resistor, a hydrochloric acid-absorbing agent, a chlorine scavenger, an antioxidant, an antitack agent, and the like.

At least one of the first component and the second component may further contain an internal release agent. The internal release agent as referred to herein means an additive for improving release properties of the nonwoven fabric upon being added to the resin raw material. Specifically, examples thereof include high-melting point polymers, organic carboxylic acids or metal salts thereof, aromatic sulfonic acids or metal salts thereof, organic phosphoric acid compounds or metal salts thereof, dibenzylidene sorbitol or derivatives thereof, rhodinic acid partial metal salts, inorganic fine particles, imides, amides, quinacridones, quinones, and mixtures thereof, and the like.

Examples of the high-melting point polymer include polyolefins, such as polyethylene, polypropylene, etc., and the like.

Examples of the organic carboxylic acid include fatty acids, such as octylic acid, palmitic acid, lauric acid, stearic

acid, behenic acid, montanic acid, 12-hydroxystearic acid, oleic acid, isostearic acid, ricinoleic acid, etc., and aromatic carboxylic acids, such as benzoic acid, p-t-butyl-benzoic acid, etc. Examples of the metal salt of an organic carboxylic acid include salts of Li, Ca, Ba, Zn, Mg, Al, Pb, and the like of the above-described organic carboxylic acids, and metallic soaps that are a metal salt of a carboxylic acid. Specifically, examples thereof include aluminum benzoate, aluminum p-t-butylbenzoate, sodium adipate, sodium thiophenecarboxylate, sodium pyrrolecarboxylate, and the like.

Examples of the aromatic sulfonic acid include a linear alkylbenzenesulfonic acid, a branched alkylbenzenesulfonic acid, naphthalenesulfonic acid, dodecylbenzenesulfonic acid, and the like. Examples of the metal salt of an aromatic sulfonic acid include salts of Li, Ca, Ba, Zn, Mg, Al, Pb, and the like of the above-described aromatic sulfonic acids.

Examples of the organic phosphoric acid compound include trimethyl phosphate, triethyl phosphate, tributyl phosphate, 2-ethylhexyl phosphate, butoxyethyl phosphate, triphenyl phosphate, tricresyl phosphate, trixylenyl phosphate, cresyldiphenyl phosphate, 2-ethylhexyldiphenyl phosphate, cresyldi-2,6-xylenyl phosphate, resorcinoldiphenol phosphate, various aromatic condensed phosphate esters, 2-chloroethyl phosphate, chloropropyl phosphate, dichloropropyl phosphate, tribromoneopentyl phosphate, a halogen-containing condensed phosphoric acid, bis-2-ethylhexyl phosphate, diisodecyl phosphate, 2-methacryloyloxyethyl acid phosphate, diphenyl-2-methacryloyloxyethyl phosphate, methyl acid phosphate, butyl acid phosphate, monoisodecyl phosphate, 2-butylhexyl acid phosphate, isodecyl acid phosphate, triphenyl phosphate, dibutyl hydrogen phosphate, dibutyl hydrogen phosphate, polyoxyethylene lauryl ether phosphoric acid, polyoxyalkyl ether phosphoric acid, polyoxyethylene alkyl phenyl ether phosphoric acid, polyoxyethylene dialkyl phenyl ether phosphoric acid, and the like; and examples of the metal salt of an organic phosphoric acid compound include metal salts of Li, Ca, Ba, Zn, Mg, Al, Pb, and the like of the above-described organic phosphoric acid compounds. Examples of commercially available products thereof include ADEKA STAB NA-11 and ADEKA STAB NA-21, all of which are manufactured by ADEKA Corporation, and the like.

Examples of dibenzylidene sorbitol or its derivative include dibenzylidene sorbitol, 1,3:2,4-bis(o-3,4-dimethylbenzylidene)sorbitol, 1,3:2,4-bis(o-2,4-dimethylbenzylidene)sorbitol,
1,3:2,4-bis(o-4-ethylbenzylidene)sorbitol,
1,3:2,4-bis(o-4-chlorobenzylidene)sorbitol, 1,3:2,4-dibenzylidene sorbitol, and the like. Examples of commercially available products thereof include GEL ALL MD and GEL ALL MD-R, all of which are manufactured by New Japan Chemical Co., Ltd., and the like.

Examples of the rhodinic acid partial metal salt include PINECRYSTAL KM1600, PINECRYSTAL KM1500, and PINECRYSTAL KM1300, all of which are manufactured by Arakawa Chemical Industries, Ltd., and the like.

Examples of the inorganic fine particle include talc, clay, mica, asbestos, glass fiber, glass flake, glass bead, calcium silicate, montmorillonite, bentonite, graphite, aluminum powder, alumina, silica, diatomaceous earth, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, molybdenum sulfide, and the like. Examples of commercially available products thereof include SYLYSIA, manufactured by Fuji Silysia Chemical Ltd., MIZUKASIL, manufactured by Mizusawa Industrial Chemicals, Ltd., and the like.

These internal release agents may be used solely or in combination of two or more kinds thereof. In the present invention, among these internal release agents, dibenzylidene sorbitol, 1,3:2,4-bis(o-3,4-dimethylbenzylidene)sorbitol, 1,3:2,4-bis(o-2,4-dimethylbenzylidene)sorbitol,
1,3:2,4-bis(o-4-ethylbenzylidene)sorbitol,
1,3:2,4-bis(o-4-chlorobenzylidene)sorbitol, and 1,3:2,4-dibenzylidene sorbitol are preferred.

A content of the internal release agent is preferably 10 to 10,000 ppm by mass, and more preferably 100 to 5,000 ppm by mass on the basis of the composition of the first component or the second component containing the internal release agent. When the content of the internal release agent is 10 ppm by mass or more, the function as the release agent is revealed, whereas when it is 10,000 ppm by mass or less, a balance between the function as the release agent and the economy becomes favorable.

Now, in the crimped nonwoven fabric constituted of the side-by-side fiber, in particular, in the case where a difference in viscosity between the two components constituting the fiber is large, and both the first component and the second component are fast in a crystallization rate, in the production method of a fiber as described later, the fiber is abruptly crimped just beneath the stretching step of a fiber (e.g., an ejector or a cabin). At this time, there is a concern that a roping phenomenon in which fibers are entangled with each other is revealed, whereby uniformity (uniformity of the appearance) of the nonwoven fabric is impaired.

Then, in the present invention, it has also been found that by adding the propylene-based polymer (B) component of the present invention as one component of the side-by-side fiber, it becomes possible to suppress the generation of a roping phenomenon following abrupt crimping just beneath the stretching step of a fiber, and a nonwoven fabric excellent in a balance between crimping properties and uniformity of formation is obtained.

[Production Method of Side-by-Side Type Fiber]

As for the crimped fiber in the present invention, an example of the production method of a side-by-side type fiber is shown below.

The side-by-side type fiber of the present invention is produced by the melt spinning method in which the resins of at least two components are each separately melt extruded with an extruder and extruded from special spinning nozzles as disclosed in, for example, U.S. Patent 3,671,379, and the molten resins each separately melt extruded from the extruder are joined and discharged in a fiber form, followed by cooling for solidification.

Here, the discharge speed and the take-off wind-up speed after spinning are property set depending upon physical properties of the resins, a mass ratio of the two components, and the like.

In the production method of a side-by-side type fiber in the present invention, the desired fiber may be produced even without performing a post-treatment step, such as heating or stretching after spinning, etc.; however, the above-described post-treatment step may be adopted, if desired. For example, the crimping degree of the fiber may be increased by heating at 100 to 150°C, stretching in a ratio of 1.2 to 5 times, or a combined condition thereof.

In an embodiment of the present invention, in the side-by-side type fiber, the above-described propylene-based polymer (1-B) is compounded in only the first component, but the present invention is not limited thereto. The above-described propylene-based polymer (1-B) may also be added in the second component according to the melting point or physical properties of the propylene-based polymer (1-B) to be added.

As for the side-by-side type fiber constituting the nonwoven fabric of the present invention, a fineness as calculated by the following measuring method is preferably 0.5 deniers or more and 2.5 deniers or less, and more preferably 0.8 to 2.0 deniers from the viewpoints of a balance among texture of the nonwoven fabric, flexibility, and strength. The nonwoven fabric of the present invention is small in terms of the fineness as described above and is excellent in terms of spinning stability even under forming conditions under which end breakage likely occurs.

[Measurement of Fineness]

Fibers in a nonwoven fabric are observed with a polarizing microscope, an average value (d) of diameter of randomly selected five fibers is measured, and the fineness of the nonwoven fabric sample is calculated from a density of the resin ($\rho$ = 900,000 g/m$^3$) according to the following expression [1].

$$\text{Fineness (denier)} = \rho \times \pi \times (d/2)^2 \times 9{,}000 \qquad [1]$$

[Production Method of Eccentric Core-Sheath Type Fiber]

As for the crimped fiber in the present invention, an example of the production method of an eccentric core-sheath type fiber is shown below.

The production method of an eccentric core-sheath type fiber is the same as in the above-described side-by-side type fiber, except that the mass fraction of the sheath component and the mass fraction of the core component are controlled by adjusting the resin discharge amounts of the core and the sheath in core-sheath composite nozzles used for the formation of a nonwoven fabric, and therefore, a detailed explanation thereof is herein omitted.

[Nonwoven Fabric]

The nonwoven fabric of the present invention may also be a multilayered nonwoven fabric that is a spunbonded nonwoven fabric using the crimped fiber of the present invention (either the side-by-side type fiber or the eccentric core-sheath type fiber) and is composed of a laminate of two or more layers. In that case, from the viewpoint of smoothness of the surface, it is preferred that at least one layer of the nonwoven fabric constituting an outer layer of the multilayered nonwoven fabric is the spunbonded nonwoven fabric composed of the crimped fiber of the present invention (either the side-by-side type fiber or the eccentric core-sheath type fiber).

In the nonwoven fabric of the present invention, the crimping degree of the fiber in the nonwoven fabric may be increased by cutting the crimped fiber of the present invention into a short fiber and forming the short fiber into a nonwoven fabric by means of card method or spunlacing method, or further chemical bonding or thermal bonding, followed by stretching or heating.

As for the nonwoven fabric, a fiber bundle laminated on the net surface is subjected to thermal press bonding to form a nonwoven fabric. When the heating temperature is excessively high, sufficient bulkiness is not obtained, whereas when the heating temperature is low, fusion among the fibers is not sufficient, so that it may be expected that

fluffing is generated. As for the nonwoven fabric of the present invention, it is possible to form a nonwoven fabric at a heating temperature that is a relatively low temperature as 20°C to 100°C, sufficient bulkiness is obtained, and a fluffing-free nonwoven fabric may be obtained.

In the case where an embossing area ratio is small, even if the embossing temperature is not a relatively low temperature, it is possible to obtain a nonwoven fabric that is bulky and free from fluffing similar to the nonwoven fabric of the present invention.

Here, the "embossing area ratio" refers to an occupation ratio of an embossed pattern per unit area.

[Fiber product]

Although the fiber product using the nonwoven fabric of the present invention is not particularly limited, the following fiber products may be exemplified. That is, there may be exemplified a member for a disposable diaper, a stretchable member for a diaper cover, a stretchable member for a sanitary product, a stretchable member for a hygienic product, a stretchable tape, an adhesive bandage, a stretchable member for clothing, an insulating material for clothing, a heat insulating material for clothing, a protective suit, a hat, a mask, a glove, a supporter, a stretchable bandage, a base fabric for a fomentation, a non-slip base fabric, a vibration absorber, a finger cot, an air filter for a clean room, an electret filter subjected to electret processing, a separator, a heat insulator, a coffee bag, a food packaging material, a ceiling skin material for an automobile, an acoustic insulating material, a cushioning material, a speaker dust-proof material, an air cleaner material, an insulator skin, a backing material, an adhesive nonwoven fabric sheet, various members for automobiles, such as a door trim, etc., various cleaning materials, such as a cleaning material for a copying machine, the facing and backing of a carpet, an agricultural beaming, a timber drain, members for shoes, such as a sport shoe skin, etc., a member for a bag, an industrial sealing material, a wiping material, a sheet, and the like. In view of the fact that the crimped fiber of the present invention is a fiber that is high in crimping degree and stretching rate and bulky, it has air holding properties and heat insulation effect, and hence, it may also be used as a heat insulation material.

EXAMPLES

[Production Example]

Preparation of Propylene-based Polymer (1-B)[I], Propylene-based Polymer (1-B)[II], and Propylene-based Polymer (1-B)[III]

Into a stirrer-equipped stainless steel-made reactor having an internal volume of 0.25 $m^3$, 26 L/h of n-heptane, 7.7 mmol/h of triisobutylaluminum, and further a catalyst component obtained by previously bringing dimethylanilinium tetrakis(p entafluorop henyl)b orate, (1,2'-dimethylsilylene)(2,1'-dimethylsilylene)-bis(3-trimethylsilylmethylindenyl)zi rconium dichloride, triisobutylaluminum, and propylene into contact with each other while these were continuously supplied. Propylene and hydrogen were continuously supplied so as to keep a whole pressure within the reactor to 1.0 MPa·G, and a polymerization temperature was properly adjusted to obtain a polymerization solution having a desired molecular weight. To the resulting polymerization solution, an antioxidant was added in an amount of 1,000 ppm by mass, and the solvent was removed to obtain a propylene-based polymer (1-B)[I], a propylene-based polymer (1-B)[II], and a propylene-based polymer (1-B)[III], respectively.

Raw materials used in the Examples and Comparative Examples are shown below.

[1] "Y2005GP", manufactured by Prime Polymer Co., Ltd.
MFR: 20 g/10 min (measured at a temperature of 230°C and a load of 21.18 N in conformity with JIS K7210:1999)
[2] "S119", manufactured by Prime Polymer Co., Ltd.
MFR: 60 g/10 min (measured at a temperature of 230°C and a load of 21.18 N in conformity with JIS K7210:1999)
[3] "Moplen HP461Y", manufactured by PolyMirae
MFR: 1,300 g/10 min (measured at a temperature of 230°C and a load of 21.18 N in conformity with ASTM D1238)

Physical properties of the above-described propylene-based polymers are shown in the following Table 1.

The above-described physical properties were determined according to the following measurements.

[Measurement of Weight Average Molecular Weight (Mw) and Molecular Weight Distribution (Mw/Mn)]

The weight average molecular weight (Mw) and the molecular weight distribution (Mw/Mn) were determined by the gel permeation chromatography (GPC) method. The following device and conditions were used in the measurement

to obtain a weight average molecular weight as converted into polystyrene.

<GPC Measuring Device>

Column: TOSO GMHHR-H(S)HT, manufactured by Tosoh Corporation
Detector: RI detector for liquid chromatography (manufactured by Waters Corporation)

<Measurement Conditions>

Solvent: 1,2,4-Trichlorobezene
Measurement temperature: 145°C
Flow rate: 1.0 mL/min
Sample concentration: 2.2 mg/mL
Injection amount: 160 μL
Calibration curve: Universal Calibration
Analysis program: HT-GPC (Ver. 1.0)

[Measurement of $^{13}$C-NMR Spectrum]

The $^{13}$C-NMR spectrum was measured with the following device under the following conditions in accordance with the assignment of a peak, as proposed by A. Zambelli, et al., "Macromolecules, 8, 687 (1975)".

Device: $^{13}$C-NMR device, "JNM-EX400 Model", manufactured by JEOL, Ltd.
Method: Proton complete decoupling method
Concentration: 220 mg/mL
Solvent: Mixed solvent of 1,2,4-trichlorobenzene and deuterated benzene in a ratio of 90/10 (volume ratio)
Temperature: 130°C
Pulse width: 45°
Pulse repetition time: 4 seconds
Accumulation: 10,000 times

<Calculating Expressions>

$$M = m/S \times 100$$

$$R = \gamma/S \times 100$$

$$S = P\beta\beta + P\alpha\beta + P\alpha\gamma$$

S: Signal intensity of carbon atoms in side chain methyl of all the propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: Racemic pentad chain, 20.7 to 20.3 ppm
m: Mesopentad chain, 21.7 to 22.5 ppm

[Melting Point (Tm-D)]

A melting endotherm obtained by holding 10 mg of a sample at -10°C for 5 minutes under a nitrogen atmosphere and then increasing the temperature at a rate of 10°C/min by using a differential scanning calorimeter (DSC-7, manufactured PerkinElmer Inc.) was determined in terms of a melting endotherm (ΔH-D) and a glass transition temperature (Tg). In addition, a melting point (Tm - D) was determined from a peak top of a peak observed on the highest temperature side of the resulting melting endothermic curve.

[Semi-crystallization Time]

The semi-crystallization time of the resin component constituting each of the first component and the second component was measured by the following method.

The semi-crystallization time is measured using FLASH DSC (manufactured by Mettler Toledo International Inc.) by the following method.

(1) A sample is heated and melted at 230°C for 2 minutes and then cooled to 25°C at a rate of 2,000°C/sec, thereby measuring a change in calorific value with time in an isothermal crystallization process at 25°C.

(2) When an integrated value of the calorific value from the start of isothermal crystallization until the completion of crystallization was defined as 100%, a time from the start of isothermal crystallization until the integrated value of the calorific value became 50% was defined as the semi-crystallization time.

[Degree of Crystallization]

The degree of crystallization of the resin component constituting each of the first component and the second component was measured by the following method.

Using a differential scanning calorimeter (DSC-7, manufactured PerkinElmer Inc.), 10 mg of a sample was held at 220°C for 5 minutes under a nitrogen atmosphere, and the temperature was then decreased to -40°C at a rate of 10°C/min. A melting endotherm ΔH was determined from an area surrounded by a line portion containing a peak of a melting endothermic curve obtained by holding the resulting sample at -40°C for 5 minutes and then increasing the temperature to 220°C at a rate of 10°C/min and a line connecting a point on the low-temperature side free from a change of the amount of heat with a point on the high-temperature side free from a change of the amount of heat as a baseline, and the degree of crystallization (%) was calculated according to the following expression.

$$\text{Degree of crystallization (\%)} = (\Delta H/\Delta Hm^0) \times 100$$

In the expression, $\Delta Hm^0$ represents a melting endotherm of a perfect crystal, and $\Delta Hm^0$ of polypropylene is 209 J/g.

Table 1

| Polypropylene-based polymer | Mw | Mw/Mn | MFR (g/min) | Tm-D (°C) | [mmmm] (%) | rrrr/(1-mmmm) |
|---|---|---|---|---|---|---|
| Y2005GP | $2.42 \times 10^5$ | 4.5 | 20 | 161 | 94 | |
| S119 | $1.58 \times 10^5$ | 3.7 | 60 | 166 | 91 | |
| Moplen HP461Y | $1.10 \times 10^4$ | 3.2 | 1300 | 165 | nd* | nd* |
| Propylene-based polymer (1-B)[I] | $1.20 \times 10^5$ | 2 | 50 | 80 | 51 | 0.05 |
| Propylene-based polymer (1-B)[II] | $7.5 \times 10^4$ | 2 | 350 | 80 | 49 | 0.05 |
| Propylene-based polymer (1-B)[III] | $4.5 \times 10^4$ | 2 | 2,000 | 80 | 47 | 0.05 |
| * Not detected | | | | | | |

Next, the Examples and Comparative Examples of a side-by-side type fiber using the above-described raw materials are described.

Example 1

(Preparation of First Component)

80% by mass of "Y2005GP" (a trade name, manufactured by Prime Polymer Co., Ltd.) as the propylene-based polymer (1-A) and 20% by mass of the propylene polymer (1-B)[I] obtained in the Production Example as the propylene-based polymer (1-B) were compounded to prepare the propylene-based resin composition (1) that is the first component.

(Preparation of Second Component)

Only "S119" (a trade name, manufactured by Prime Polymer Co., Ltd.) was used as the propylene-based polymer (2) to provide the second component.

(Production of Crimpable Side-by-Side Type Fiber)

A crimped fiber is hereunder explained by referring to a side-by-side type fiber as an example.
The formation of a side-by-side type fiber was performed using a conjugate fiber spinning machine, bi-component spinning apparatus having two extruders. The propylene-based resin composition (1) that is the first component, and either the propylene-based polymer (2) or the propylene-based resin composition (2) that is the second component, were each separately melt extruded with a single-screw extruder at a resin temperature of 230°C, and the molten resin was discharged and spun from a side-by-side composite nozzle having a nozzle diameter of 0.22 mm (number of holes: 24 holes) at a rate of 1.0 g/min per single hole in a mass ratio of the first component to the second component of 50/50.
A side-by-side type fiber obtained by spinning was allowed to pass through two cleaning rolls at room temperature and then wound up around a take-up roll at a rate of 3,000 m/min.
The resulting fiber was evaluated by measurement methods as described later. The results are shown in Table 2.

Examples 2 to 3 and Comparative Examples 1 to 2

Spun side-by-side type fibers were obtained according to the preparation and production method of Example 1, except for changing the first component and the second component to compositions shown in Table 2.
The MFR of the propylene-based resin composition (1) that is the first component in Table 2 was measured with respect to the propylene-based resin composition (1) obtained by mixing on the basis of the composition of the first component shown in Table 2 under conditions at a temperature 230°C and a load of 21.18 N in conformity with JIS K7210:1999.
A semi-crystallization time and a degree of crystallization of the propylene-based resin composition (1) that is the first component in Table 2 were measured by the above-described measurement methods.

[Evaluation Method]

(Evaluation of Flexibility of Fiber)

About 10 cm of the resulting fiber was collected from the take-up roll and evaluated using a cantilever testing machine having a slope with an angle of inclination of 45°C on one end of a pedestal. A fiber bundle was slid at intervals of 0.5 cm on the pedestal in the slope direction, and a moving distance at a moment at which the fiber bundle was bent, and one end thereof touched at the slope was measured. It is meant that as this value is small, the flexibility of the fiber·nonwoven fabric product is high.
Here, as for the evaluation results of the flexibility shown in Table 2, the case of "3 cm or less" was judged as "acceptance".

(Crimping Degree)

About 10 cm of the resulting side-by-side type fiber was collected from the take-up roll, and one fiber was separated from the bundled yarn and measured for a number of crimps per 1 mm using a microscope. Ten samples were used for the measurement, and an average value thereof was defined as the crimping degree. It is meant that as the value of the crimping degree is high, the fiber is crimped, and a bulky fiber·nonwoven fabric product is obtained.

(Stretching Rate)

5 cm (L0) of a bundle of the resulting crimpable side-by-side type fiber was collected, the fiber was stretched in a state of fixing one end of the bundle until crimping of the fiber disappeared, so that the fiber was fully stretched, and a length (L) thereof was measured. A value of L/L0 obtained by dividing L by L0 was calculated as the stretching rate. It is meant that as this stretching rate is high, the fiber is crimped, and a bulky fiber-nonwoven fabric product is obtained.

Table 2

| | | Polypropylene-based polymer | MFR | Example 1 | Example 2 | Example 3 | Comparative Example 1 | Comparative Example 2 |
|---|---|---|---|---|---|---|---|---|
| First component | (1-A) | Y2005GP | 20 g/10 min | 80% by mass | 60% by mass | 80% by mass | 100% by mass | 0% by mass |
| | | S119 | 60 g/10 min | 0% by mass | 0% by mass | 0% by mass | 0% by mass | 100% by mass |
| | (1-B) | Propylene-based polymer (1-B)[I] | 50 g/10 min | 20% by mass | 40% by mass | 20% by mass | 0% by mass | 0% by mass |
| | Total MFR (g/10 min) | | | 24 | 29 | 24 | 20 | 60 |
| | Semi-crystallization time (sec at 25°C) | | | 0.127 | 0.186 | 0.127 | 0.066 | 0.066 |
| | Degree of crystallization (%) | | | 39 | 30 | 39 | 49 | 49 |
| Second component | (2) | S119 | 60 g/10 min | 100% by mass | 100% by mass | 0% by mass | 100% by mass | 100% by mass |
| | (2) | Y2005GP | 20 g/10 min | 0% by mass | 0% by mass | 100% by mass | 0% by mass | 0% by mass |
| | Total MFR (g/10 min) | | | 60 | 60 | 20 | 60 | 60 |
| | Semi-crystallization time (sec at 25°C) | | | 0.066 | 0.066 | 0.066 | 0.066 | 0.066 |
| | Degree of crystallization (%) | | | 49 | 49 | 49 | 49 | 49 |
| First component/second component | | | Mass ratio | 50/50 | 50/50 | 50/50 | 50/50 | 50/50 |
| Flexibility (cantilever testing machine) | | | (cm) | 3.0 | 1.0 | 3.0 | 5.5 | 5.0 |
| Crimping degree | | | Number of crimps per mm | 1.5 | 1.7 | 1.0 | 1.1 | 0.0 |
| Stretching rate | | | (Times) | 3.7 | 3.5 | 2.3 | 1.8 | 1.0 |

As is noted from the results of Table 2, Comparative Examples 1 and 2 using only the propylene polymer (1-A) as the first component are low in terms of flexibility, crimping degree, and stretching rate, and Comparative Examples 1 and 2 not using the "propylene-based polymer (1-B)[I]" produced in the Production Example as the propylene polymer (1-B) that is the first component are low in terms of crimping degree and stretching rate.
On the other hand, it is noted that Examples 1 to 3 using the propylene-based resin composition (1-B)[I] containing the above-described propylene polymer (1-A) and propylene polymer (1-B) as the first component are excellent in flexibility, are high in crimping degree, and are conspicuously improved in terms of stretching rate.

Example 4

(Preparation of First Component)

80% by mass of "NOVATEC SA03" (a trade name, manufactured by Nippon Polypropylene Corporation) as the propylene-based polymer (1-A) and 20% by mass of the propylene-based polymer (1-B)[II] obtained in the Production Example as the propylene-based polymer (1-B) were compounded to prepare a propylene-based resin composition that is the first component.

(Preparation of Second Component)

Only "NOVATEC SA03" (a trade name, manufactured by Nippon Polypropylene Corporation) was used as the propylene-based polymer (2) to prepare the second component.
A melting point "Tm-D" of "NOVATEC SA03" (a trade name, manufactured by Nippon Polypropylene Corporation) was 167°C.

(Production of Crimpable Side-by-Side Type Nonwoven Fabric)

The resin composition that is the first component and the resin composition that is the second component were each separately melt extruded with a single-screw extruder at a resin temperature of 240°C, and the molten resin was discharged and spun from a side-by-side composite nozzle having a nozzle diameter of 0.6mm (number of holes: 1,795 holes) at a rate of 0.35 g/min per single hole in a mass ratio of the first component to the second component of 50/50.
The fibers obtained by spinning were sucked using an ejector placed at 1,400 mm beneath the nozzle at an ejector pressure of 2.0 $kgf/cm^2$ while cooling with air at a temperature of 12.5°C and at a wind velocity of 0.8 m/sec and laminated on a net surface placed at 255 mm beneath the nozzle and moving at a line speed of 71 m/min.
The fiber bundle thus laminated on the net surface was embossed by an embossing roll heated at 50°C at a line pressure of 40 N/mm and wound up by a take-up roll.
The resulting nonwoven fabric was subjected to the following measurement and evaluation. The results are shown in Table 3.

(Evaluation of Bulkiness)

Ten sheets of nonwoven fabric samples having a size of 5 cm × 5 cm were superimposed, 1.9 g of a metal plate was placed on the superimposed nonwoven fabric sample, and a thickness of the superimposed nonwoven fabric samples was measured. It is meant that as the numerical value of the thickness is high, the nonwoven fabric is high in bulkiness.

(Embossing Area Ratio)

The embossing area ratio refers to an occupation ratio of an embossed pattern per unit area.

Table 3

| | | Polypropylene-based polymer | MFR | Example 4 |
|---|---|---|---|---|
| First component | (1-A) | NOVATEC SA03 | 30 g/10 min | 80% by mass |
| | (1-B) | Propylene-based polymer (1-B)[II] | 350 g/10 min | 20% by mass |
| | Total MFR (g/10 min) | | | 49 |

(continued)

| | | Polypropylene-based polymer | MFR | Example 4 |
|---|---|---|---|---|
| Second component | (2) | NOVATEC SA03 | 30 g/10 min | 100% by mass |
| | Total MFR (g/10 min) | | | 30 |
| First component/second component | | | Mass ratio | 50/50 |
| Bulkiness | | | (mm) | 11.2 |
| Fiber diameter | | | (denier) | 1.2 |
| Embossing area ratio (%) | | | | 17.4 |

It is noted from the results of Example 4 of Table 3 that a fiber assembly that is bulky and has favorable texture is obtained.

Example 5

(Preparation of First Component)

80% by mass of "NOVATEC SA03" (a trade name, manufactured by Nippon Polypropylene Corporation) as the propylene-based polymer (1-A) and 20% by mass of the propylene-based polymer (1-B)[II] obtained in the Production Example as the propylene-based polymer (1-B) were compounded to prepare a propylene-based resin composition that is the first component.

(Preparation of Second Component)

Only "NOVATEC SA03" (a trade name, manufactured by Nippon Polypropylene Corporation) was used as the propylene-based polymer (2) to provide the second component.

(Production of Crimpable Side-by-Side Type Nonwoven Fabric)

The resin composition that is the first component and the resin composition that is the second component were each separately melt extruded with a single-screw extruder at a resin temperature of 240°C, and the molten resin was discharged and spun from a side-by-side composite nozzle having a nozzle diameter of 0.6mm (number of holes: 1,795 holes) at a rate of 0.5 g/min per single hole in a mass ratio of the first component to the second component of 50/50.

The fibers obtained by spinning were sucked using an ejector placed at 1,400 mm beneath the nozzle at an ejector pressure of 2.0 kgf/$cm^2$ while cooling with air at a temperature of 12.5°C and at a wind velocity of 0.6 m/sec and laminated on a net surface placed at 255 mm beneath the nozzle and moving at a line speed of 72 m/min.

The fiber bundle laminated on the net surface was embossed by an embossing roll (embossing area ratio: 17.4%, engraved shape: rhomb) heated at 50°C at a line pressure of 40 N/mm, and a nonwoven fabric having a basis weight of 20 g/$m^2$ was wound up by a take-up roll.

The resulting nonwoven fabric was subjected to the following measurement and evaluation. The results are shown in Table 4.

(Evaluation of Number of Crimps)

The number of crimps was measured using an automated crimp elastic modulus measuring device according to the measurement method of a number of crimps as prescribed in JIS L1015:2000. One fiber was extracted from a cotton-like sample before embossing in such a manner that a tension was not applied to the fiber, a length when an initial load of 0.18 mN/tex was applied to 25 mm of the sample was measured, and the number of crimps at that time was counted, thereby determining the number of crimps in a length of 25 mm. It is meant that as the number of crimps is large, the fiber·nonwoven fabric product is high in crimping properties.

(Evaluation of Bulkiness and Embossing Area Ratio)

The bulkiness was measured and evaluated according to the evaluation of bulkiness and embossing area ratio described in Example 4 while also including the following Examples. The embossing area ratio is also shown.

Example 6

A nonwoven fabric was formed and evaluated in the same manner as in Example 5, except that the ejector pressure was changed to 1.0 kgf/$cm^2$. The results are shown in Table 4.

Example 7

A nonwoven fabric was formed and evaluated in the same manner as in Example 5, except that the ratio of the first component to the second component regarding the resins to be discharged was changed to 70/30. The results are shown in Table 4.

Example 8

A nonwoven fabric was formed and evaluated in the same manner as in Example 5, except that the ratio of the first component to the second component regarding the resins to be discharged was changed to 30/70. The results are shown in Table 4.

Example 9

A nonwoven fabric was formed and evaluated in the same manner as in Example 5, except that, in the preparation of the first component, the propylene-based polymer (1-B)[III] obtained in the Production Example was used as the propylene-based polymer (1-B). The results are shown in Table 4.

Example 10

A nonwoven fabric was formed and evaluated in the same manner as in Example 5, except that, in the preparation of the first component, the propylene-based polymer (1-B)[III] obtained in the Production Example was used as the propylene-based polymer (1-B), and the ratio of the first component to the second component regarding the resins to be discharged was changed to 70/30. The results are shown in Table 4.

Example 11

A nonwoven fabric was formed and evaluated in the same manner as in Example 5, except that, in the preparation of the first component, 78% by mass of "NOVATEC SA03" (a trade name, manufactured by Nippon Polypropylene Corporation), 20% by mass of the propylene-based polymer (1-B)[III] obtained in the Production Example as the propylene-based polymer (1-B), and 2% by mass of a slipping agent master batch (lubricant master batch) composed of 90% by mass of highly crystalline polypropylene (PP, "Y6005GM", manufactured by Prime Polymer Co., Ltd.) and 10% by mass of erucic acid amide were compounded, and the ratio of the first component to the second component regarding the resins to be discharged was changed to 70/30. The results are shown in Table 4.

Example 15

A nonwoven fabric was formed and evaluated in the same manner as in Example 5, except that, in the preparation of the first component, 78% by mass of "NOVATEC SA03" (a trade name, manufactured by Nippon Polypropylene Corporation), 20% by mass of the propylene-based polymer (1-B)[I] obtained in the Production Example as the propylene-based polymer (1-B), and 2% by mass of a slipping agent master batch (lubricant master batch) composed of 90% by mass of highly crystalline polypropylene (PP, "Y6005GM", manufactured by Prime Polymer Co., Ltd.) and 10% by mass of erucic acid amide were compounded, and the ratio of the first component to the second component regarding the resins to be discharged was changed to 70/30. The results are shown in Tables 4 and 6.

Table 4

| | | | MFR | Example 5 | Example 6 | Example 7 | Example 8 | Example 9 | Example 10 | Example 11 | Example 15 |
|---|---|---|---|---|---|---|---|---|---|---|---|
| | Propylene-based polymer | | | | | | | | | | |
| First component | (1-A) | NOVATEC SA03 | 30 g/10 min | 80% by mass | 80% by mass | 80% by mass | 80% by mass | 80% by mass | 80% by mass | 78% by mass | 78% by mass |
| | (1-B) | Propylene-based polymer (1-B)[I] | 50 g/10 min | 0% by mass | 0% by mass | 0% by mass | 0% by mass | 0% by mass | 0% by mass | 0% by mass | 20% by mass |
| | | Propylene-based polymer (1-B)[II] | 350 g/10 min | 20% by mass | 20% by mass | 20% by mass | 20% by mass | 0% by mass | 0% by mass | 0% by mass | 0% by mass |
| | | Propylene-based polymer (1-B)[III] | 2000 g/10 min | 0% by mass | 0% by mass | 0% by mass | 0% by mass | 20% by mass | 20% by mass | 20% by mass | 0% by mass |
| | Slipping agent master batch | | 60 g/10 min | 0% by mass | 0% by mass | 0% by mass | 0% by mass | 0% by mass | 0% by mass | 2% by mass | 2% by mass |
| | Total MFR | | g/10 min | 49 | 49 | 49 | 49 | 70 | 70 | 71 | 33 |
| Second component | (2) | NOVATEC SA03 | 30 g/10 min | 100% by mass | 100% by mass | 100% by mass | 100% by mass | 100% by mass | 100% by mass | 100% by mass | 98% by mass |
| | Slipping agent master batch | | 60 g/10 min | 0% by mass | 0% by mass | 0% by mass | 0% by mass | 0% by mass | 0% by mass | 0% by mass | 2% by mass |
| | Total MFR | | g/10 min | 30 | 30 | 30 | 30 | 30 | 30 | 30 | 30 |
| First component/second component | | | Weight ratio | 50/50 | 50/50 | 70/30 | 30/70 | 50/50 | 70/30 | 70/30 | 70/30 |
| Content of propylene-based polymer (1-B) relative to the whole of fiber | | | % by mass | 10 | 10 | 14 | 6 | 10 | 14 | 14 | 14 |
| Ejector pressure | | | $kgf/cm^2$ | 2.0 | 1.0 | 2.0 | 2.0 | 2.0 | 2.0 | 2.0 | 2.0 |
| Embossing area ratio | | | % | 17.4 | 17.4 | 17.4 | 17.4 | 17.4 | 17.4 | 17.4 | 17.4 |
| Bulkiness | | | mm | 5.4 | 5.1 | 6.8 | 4.9 | 5.4 | 5.4 | 4.8 | 7.8 |
| Number of crimps | | | Crimps/25 mm | 13.8 | 10.7 | 15.7 | 8.8 | 13.9 | 17.0 | 18.3 | 11.7 |
| Fiber diameter | | | denier | 1.3 | 2.0 | 1.2 | 1.3 | 1.4 | 1.2 | 1.2 | 1.2 |

It may be presumed that a difference in bulkiness between Example 4 shown in the foregoing Table 3 and Examples 5 to 11 shown in Table 4 is caused due to the degree of the crimping effect influenced by the yarn diameter.
In addition, it is noted from the results of Table 4 that by using the propylene-based polymer (1-B)[III] as the propylene polymer (1-B) that is the first component in place of the propylene-based polymer (1-B)[II] produced in the Production Example, the number of crimps of the resulting yarn becomes larger.

Example 12

(Preparation of First Component)

66% by mass of "PP3155" (a trade name, manufactured by ExxonMobil Chemical) as the propylene-based polymer (1-A), 4% by mass of a slipping agent master batch (lubricant master batch) composed of 95% by mass of highly crystalline polypropylene (PP, "Y6005GM", manufactured by Prime Polymer Co., Ltd.) and 5% by mass of erucic acid amide, and 30% by mass of the propylene-based polymer (1-B)[II] obtained in the Production Example as the propylene-based polymer (1-B) were compounded to prepare a propylene-based resin composition that is the first component.

(Preparation of Second Component)

"HG455FB" (a trade name, manufactured by Borealis AG) as the propylene-based polymer (2) and 4% by mass of a slipping agent master batch (lubricant master batch) composed of 95% by mass of highly crystalline polypropylene (PP, "Y6005GM", manufactured by Prime Polymer Co., Ltd.) and 5% by mass of erucic acid amide were compounded to prepare the second component.

(Production of Crimpable Side-by-Side Type Nonwoven Fabric)

The formation of a nonwoven fabric was performed using a spunbond machine (REICOFIL 4, manufactured by Reicofil GmbH). The resin compositions of the first component and the resin composition of the second component were spun in such a manner that the resin compositions were each separately melt extruded with a single-screw extruder at a resin temperature of 250°C and discharged through a side-by-side type composite nozzle (number of holes: 1,795 holes) at a rate of 0.5 g/min per single hole in a mass ratio of the first component to the second component of 70/30.
The fibers obtained by spinning were laminated at a temperature of 20°C and a cabin pressure of 3,000 Pa on a net surface moving at a line speed of 167 m/min. A fiber bundle thus laminated on the net surface was embossed with an embossing roll (pin-embossing/embossing area ratio: 12%, engraved shape: circle) heated at 131°C at a line pressure of 50 N/mm, and a nonwoven fabric with a basis weight of 20 g/m$^2$ was wound up around a take-up roll.
The resulting nonwoven fabric was measured and evaluated in the same manner as in Example 5. The results are shown in Table 5.

Example 13

A nonwoven fabric was formed and evaluated in the same manner as in Example 12, except that, in the preparation of the first component, 56% by mass of "PP3155" (a trade name, manufactured by ExxonMobil Chemical), 4% by mass of a slipping agent master batch (lubricant master batch) composed of 95% by mass of highly crystalline polypropylene (PP, "Y6005GM", manufactured by Prime Polymer Co., Ltd.) and 5% by mass of erucic acid amide, and 40% by mass of the propylene-based polymer (1-B)[II] obtained in the Production Example as the propylene-based polymer (1-B) were compounded to prepare a propylene-based resin composition that is the first component, and the temperature of the embossing roll was changed to 121°C. The results are shown in Table 5.

Example 14

A nonwoven fabric was formed and evaluated in the same manner as in Example 13, except that, in the preparation of the first component, the propylene-based polymer (1-B)[III] obtained in the Production Example was used as the propylene-based polymer (1-B), and the temperature of the embossing roll was changed to 115°C. The results are shown in Table 5.
The melting point "Tm-D" of "HG455FB" (a trade name, manufactured by Borealis AG) used herein as the second component (2) is 161°C (in conformity with ISO 11357-3).

Table 5

| | | | Propylene-based polymer | MFR | Example 12 | Example 13 | Example 14 |
|---|---|---|---|---|---|---|---|
| First component | (1-A) | Exxon 3155 | | 36 g/10 min | 66% by mass | 56% by mass | 56% by mass |
| | (1-B) | Propylene-based polymer (1-B)[II] | | 350 g/10 min | 30% by mass | 40% by mass | 0% by mass |
| | | Propylene-based polymer (1-B)[III] | | 2000 g/10 min | 0% by mass | 0% by mass | 40% by mass |
| | Slipping agent master batch | | | 60 g/10 min | 4% by mass | 4% by mass | 4% by mass |
| | Total MFR | | | g/10 min | 73 | 91 | 183 |
| Second component | (2) | HG455FB | | 27 g/10 min | 96% by mass | 96% by mass | 96% by mass |
| | Slipping agent master batch | | | 60 g/10 min | 4% by mass | 4% by mass | 4% by mass |
| | Total MFR | | | g/10 min | 28 | 28 | 28 |
| First component/second component ratio | | | | Weight ratio | 70/30 | 70/30 | 70/30 |
| Content of propylene-based polymer (1-B) relative to the whole of fiber | | | | % by mass | 21 | 28 | 28 |
| Embossing temperature | | | | °C | 131 | 121 | 115 |
| Embossing area ratio | | | | % | 12 | 12 | 12 |
| Bulkiness | | | | mm | 3.8 | 4.9 | 5.3 |
| Number of crimps | | | | Crimps/25 mm | 6.8 | 10.5 | 14.0 |
| Fiber diameter | | | | denier | 1.6 | 1.8 | 1.8 |

It is noted from the results of Table 5 that by using the propylene-based polymer (1-B)[III] as the propylene polymer (1-B) that is the first component in place of the propylene-based polymer (1-B)[II] produced in the Production Example, the number of crimps of the resulting yarn becomes larger.

[Uniformity of Formation]

Five sheets of specimens of 74 mm × 53 mm were prepared from the resulting nonwoven fabric. Subsequently, an image having been converted into digital data was obtained using a scanner in a state where a black drawing paper was superimposed on every specimen. Each of the resulting image data was processed to a gray scale (the degree of white and black was divided into 255 grades; it is meant that as the value is large, the color is white), thereby obtaining a histogram.

A peak of a librarian of the resulting histogram was compared with a value of the gray scale and evaluated in the following way.

A: Case where the initial peak of the histogram appears in 200 or more gray scales.
B: Case where the initial peak of the histogram appears in the range of 185 or more and less than 200 gray scales.
C: Case where the initial peak of the histogram appears in less than 185 gray scales.

Example 16

A nonwoven fabric was formed and evaluated in the same manner as in Example 5, except that in Example 5, in the preparation of the first component, 78% by mass of "NOVATEC SA03" (a trade name, manufactured by Nippon

Polypropylene Corporation), 20% by mass of the propylene-based polymer (1-B)[III] obtained in the Production Example as the propylene-based polymer (1-B), and 2% by mass of a slipping agent master batch (lubricant master batch) composed of 90% by mass of highly crystalline polypropylene (PP, "Y6005GM", manufactured by Prime Polymer Co., Ltd.) and 10% by mass of erucic acid amide were compounded, and the ratio of the first component to the second component regarding the resins to be discharged was changed to 70/30. The results are shown in Table 6.

Example 17

A nonwoven fabric was formed and evaluated in the same manner as in Example 5, except that, in the preparation of the first component, 78% by mass of "NOVATEC SA03" (a trade name, manufactured by Nippon Polypropylene Corporation), 10% by mass of the propylene-based polymer (1-B)[III] obtained in the Production Example and 10 parts by mass of "Moplen HP461Y (a trade name, manufactured by PolyMirae) as the propylene-based polymer (1-B), and 2% by mass of a slipping agent master batch (lubricant master batch) composed of 90% by mass of highly crystalline polypropylene (PP, "Y6005GM", manufactured by Prime Polymer Co., Ltd.) and 10% by mass of erucic acid amide were compounded, and the ratio of the first component to the second component regarding the resins to be discharged was changed to 70/30. The results are shown in Table 6.

Comparative Example 3

A nonwoven fabric was formed and evaluated in the same manner as in Example 5, except that, in the preparation of the first component, 78% by mass of "NOVATEC SA03" (a trade name, manufactured by Nippon Polypropylene Corporation), 20 parts by mass of "Moplen HP461Y (a trade name, manufactured by PolyMirae) as the propylene-based polymer (1-B), and 2% by mass of a slipping agent master batch (lubricant master batch) composed of 90% by mass of highly crystalline polypropylene (PP, "Y6005GM", manufactured by Prime Polymer Co., Ltd.) and 10% by mass of erucic acid amide were compounded, and the ratio of the first component to the second component regarding the resins to be discharged was changed to 70/30. The results are shown in Table 6.

Table 6

| | Propylene-based polymer | | MFR | Example 15 | Example 16 | Example 17 | Comparative Example 3 |
|---|---|---|---|---|---|---|---|
| First component | (1-A) | NOVATEC SA03 | 30 g/10 min | 78% by mass | 78% by mass | 78% by mass | 78% by mass |
| | (1-B) | Propylene-based polymer (1-B)[I] | 50 g/10 min | 20% by mass | 0% by mass | 0% by mass | 0% by mass |
| | | Propylene-based polymer (1-B)[III] | 2000 g/10 min | 0% by mass | 20% by mass | 10% by mass | 0% by mass |
| | | Moplen HO461Y | 1200 g/10 min | 0% by mass | 0% by mass | 10% by mass | 20% by mass |
| | Slipping agent master batch | | 60 g/10 min | 2% by mass | 2% by mass | 2% by mass | 2% by mass |
| | Total MFR | | g/10 min | 71 | 71 | 66 | 64 |
| Second component | (2) | NOVATEC SA03 | 30 g/10 min | 98% by mass | 98% by mass | 98% by mass | 98% by mass |
| | Slipping agent master batch | | 60 g/10 min | 2% by mass | 2% by mass | 2% by mass | 2% by mass |
| | Total MFR | | g/10 min | 30 | 30 | 30 | 30 |
| First component/second component ratio | | | Weight ratio | 70/30 | 70/30 | 70/30 | 70/30 |
| Content of propylene-based polymer (1-B) relative to the whole of fiber | | | % by mass | 14 | 14 | 7 | 0 |
| Ejector pressure | | | $kgf/cm^2$ | 2.0 | 2.0 | 2.0 | 2.0 |

(continued)

| | Propylene-based polymer | MFR | Example 15 | Example 16 | Example 17 | Comparative Example 3 |
|---|---|---|---|---|---|---|
| Embossing area ratio | | % | 17.4 | 17.4 | 17.4 | 17.4 |
| Number of crimps | | Crimps/25 mm | 11.7 | 20.0 | 24.2 | Unmeasurable* |
| Uniformity of formation* | | | A | A | B | C |
| *: Unmeasurable because of a frequent occurrence of roping just beneath the ejector | | | | | | |

INDUSTRIAL APPLICABILITY

The crimped fiber of the present invention is a fiber having strong crimpability using a polyolefin-based material without performing a post-treatment, such as stretching, heating, etc., and is useful for producing a fiber assembly (for example, a nonwoven fabric) that is bulky and favorable in texture and a filter or a wiper using the same. In addition, the nonwoven fabric including the crimped fiber of the present invention is suitably used for various fiber products, for example, a disposable diaper, a sanitary product, a hygienic product, a clothing material, a bandage, a packaging material, etc.

## Claims

**1.** A crimped fiber comprising a first component and a second component, wherein the first component is a propylene-based resin composition containing a propylene-based polymer (1-A) in which a melt flow rate (MFR) measured at a temperature of 230°C and a load of 21.18 N is 1 g/10 min or more and 2,000 g/10 min or less, and a melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) exceeds 120°C, and a propylene-based polymer (1-B) satisfying the following conditions (a) to (c):

(a) a weight average molecular weight (Mw) is 10,000 to 200,000,
(b) a molecular weight distribution (Mw/Mn) is less than 4.0, and
(c) a melting point (Tm-D) defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC) is 0 to 120°C, and

the second component is a propylene-based polymer (2) in which a melt flow rate (MFR) measured under the foregoing measurement condition is 1 g/10 min or more and 2,000 g/10 min or less, and a melting point (Tm-D) observed under the foregoing measurement condition by using a differential scanning calorimeter (DSC) exceeds 120°C, or a propylene-based resin composition containing the propylene-based polymer (2).

**2.** The crimped fiber according to claim 1, wherein the melt flow rate (MFR) of the resin component constituting the first component and the melt flow rate (MFR) of the resin component constituting the second component are different from each other.

**3.** The crimped fiber according to claim 1, wherein a degree of crystallization of the resin component constituting the first component and a degree of crystallization of the resin composition constituting the second component are different from each other.

**4.** The crimped fiber according to claim 1, wherein a half-crystallization time of the resin component constituting the first component and a half-crystallization time of the resin component constituting the second component are different from each other.

**5.** The crimped fiber according to any of claims 1 to 4, wherein the first component contains the propylene-based polymer (1-B) in an amount of 1% by mass or more and 95% by mass or less, and a mass ratio of the propylene-based resin composition that is the first component to the propylene-based resin composition that is the second

component is from 10/90 to 90/10.

6. The crimped fiber according to any of claims 1 to 5, wherein the propylene-based polymer (1-B) is a propylene homopolymer or a copolymer having a copolymerization ratio of a propylene unit of 50 mol% or more.

7. The crimped fiber according to any of claims 1 to 6, wherein the propylene-based polymer (1-B) is a propylene homopolymer.

8. The crimped fiber according to any of claims 1 to 7, wherein the crimped fiber is a side-by-side type fiber or an eccentric core-sheath type fiber.

9. A nonwoven fabric comprising the crimped fiber according to any of claims 1 to 8.

10. A multilayred nonwoven fabric comprising a laminate of two or more layers, wherein at least one layer thereof is the nonwoven fabric according to claim 9.

## INTERNATIONAL SEARCH REPORT

International application No.
PCT/JP2015/058144

A. CLASSIFICATION OF SUBJECT MATTER
*D01F8/06*(2006.01)i, *D04H3/007*(2012.01)i, *D04H3/147*(2012.01)i

According to International Patent Classification (IPC) or to both national classification and IPC

B. FIELDS SEARCHED

Minimum documentation searched (classification system followed by classification symbols)
D01F8/00-8/18, D04H1/00-18/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2009/001871 A1 (Idemitsu Kosan Co., Ltd.), 31 December 2008 (31.12.2008), claims; paragraphs [0033], [0056], [0063] & EP 2161360 A1 claims; paragraphs [0033], [0057], [0063] & JP 2009-62667 A & JP 2013-237964 A & JP 2009-79341 A & JP 2009-209506 A & US 2010/0190405 A1 & CN 101688341 A & KR 10-2010-0031108 A | 1-10 |
| A | WO 2010/050407 A1 (Mitsui Chemicals, Inc.), 06 May 2010 (06.05.2010), paragraph [0046] & JP 5289459 B & US 2011/0189915 A1 & EP 2343406 A1 & CN 102197171 A | 1-10 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 June 2015 (15.06.15) | 23 June 2015 (23.06.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/058144

C (Continuation). DOCUMENTS CONSIDERED TO BE RELEVANT

| Category* | Citation of document, with indication, where appropriate, of the relevant passages | Relevant to claim No. |
|---|---|---|
| A | WO 2003/087172 A1 (Idemitsu Petrochemical Co., Ltd.), 23 October 2003 (23.10.2003), page 15, lines 13 to 14 & JP 2009-114462 A & US 2005/0171295 A1 & EP 1498434 A1 & TW 200306986 A | 6-7 |
| A | WO 2006/051708 A1 (Idemitsu Kosan Co., Ltd.), 18 May 2006 (18.05.2006), & JP 4969249 B & US 2009/0098786 A1 | 1-10 |
| A | WO 2011/090132 A1 (Idemitsu Kosan Co., Ltd.), 28 July 2011 (28.07.2011), & JP 2011-168944 A & US 2012/0302982 A1 & EP 2527508 A1 | 1-10 |
| A | WO 2011/030893 A1 (Idemitsu Kosan Co., Ltd.), 17 March 2011 (17.03.2011), & US 2012/0208422 A1 & EP 2479331 A1 & EP 2813611 A1 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012251254 A
- JP 2012158861 A
- WO 2003087172 A
- US 3671379 A